# EUROPEAN PATENT SPECIFICATION

(11) **EP 1 908 742 B1**
(45) Date of publication and mention of the grant of the patent: **27.04.2011**
(21) Application number: 06020783.4
(22) Date of filing: 03.10.2006
(51) Int. Cl.: C05F 17/02, C05F 17/00, F26B 21/00, B01F 7/16

(54) **Biological waste treatment plant**
Anlage zur Behandlung biologischer Abfälle
installation de traitement de dechets biologiques

(43) Date of publication of application: 09.04.2008
(73) Proprietor: Sct Sorain Cecchini Tecno S.R.L., 00128 Roma (IT)
(72) Inventor: Carrera, Alberto, 00128 Roma (IT)
(74) Representative: Gervasi, Gemma

(56) References cited:
- EP-A2- 0 145 874
- WO-A-86/01197
- WO-A-98/49122
- GB-A- 1 165 058
- GB-A- 2 192 662
- US-B1- 6 284 529

## Description

### Technical field

The present invention relates to a biological waste treatment plant.

### State of the Art

An enormous amount of organic waste is produced daily by the human food chain, in agriculture and by the agro-industrial sector. This organic waste accounts for a large part of solid urban waste, being one of the main components of sewage and constituting the residue of the agro-industry and other industries.

The problem is how to treat this waste, so as to prevent its entering the sewerage, and to reutilize it.

Aerobic decomposition by means of micro-organisms (composting) is undoubtedly a very efficient and economic technique. The biological treatment plants currently known generally operate by feeding the organic matter, either continuously or in batches, into treatment tanks of various shapes, where it is stirred by mechanical means, so as to achieve a state of homogenization, and conveyed forwards, so as to make room for the inflowing waste matter; furthermore, the treated matter is kept well aerated, so as to ensure that the micro-organisms which perform the biological process, are well supplied with the necessary quantity of oxygen.

Various waste treatment plants are known which operate according to the above mentioned technique; however, they all feature drawbacks which limit their efficiency.

For example, Swedish patent SE 366289 deposited on 27-4-1974 by Johnson Construction Company AB, provides for a treatment tank with a sloping base, above which are suspended one or more sets of screw propellers, pivoted around a horizontal axis attached to a roller bridge, which are lowered into the mass and move across the entire length of the treatment tank, from the inflow wall to the outflow wall, thus mixing and conveying the mass forward to make space for new waste matter. When the screw propellers reach the outflow wall they are pivoted about their hinges, pulled out of the mass and then moved back to the inflow wall, where they are once again lowered into the mass to begin a new cycle. The air for the micro-organisms performing the biological process is pumped through the screw propellers themselves, which are hollow inside.

This kind of system features a number of serious drawbacks, such as: a loss of about 50% of the working time for the return of the idle screw propellers across the treatment tank at the end of each process cycle; the non-uniform progression of the mass from the inflow side of the treatment tank to the outflow, owing to the necessary extraction and re-immersion of the screw propellers inside the mass; and the prerequisite of a treatment tank with a steeply sloping base, to assist the progression of the mass, since it would otherwise exert too strong a resistance to the screw propellers, jeopardising the correct operation of the system's mechanical parts. This loss of time translates into a reduction of the treatment capacity, while the non-uniform progression of the mass, as well as the variation in time, of the order of 50%, required by the waste matter to achieve an adequate degree of maturation, may completely alter the treatment performance, which is measured by the level of maturation and is closely linked to the time spent in the treatment tank all the particles composing the mass, and other parameters, such as mixing and aeration.

The Italian patent IT 1203711 (EP 145874) deposited on 18-10-1983 by Secit SpA, provides a technique similar to the one described in the Swedish patent, whereby: the screw propellers advance in the same direction as the mass; the screw propellers are removed from the mass by means of motion along their axis, perpendicular to the base of the tank; and the aeration of the mass takes place through protected pipes laid on the bottom of the treatment tank.

With the exception of the non-uniform advancement of the mass, a deficiency remedied by the extraction and re-immersion of the screw propellers, which travel along their axes, no remedy is found for the other drawbacks of the Swedish patent, on the contrary, to these must be added the further disadvantage of having to provide for a building large enough to house the entire plant, which is quite tall, so as to enable the raising of the screw propellers.

Since all plants of this kind must be adequately sealed to the outside, for obvious reasons impact on the environment, a taller building, besides entailing higher construction costs, also requires higher operating costs, owing to the larger amounts of air to be circulated within the building and then deodorized, since the number of changes of air per hour must be the same.

The European Patent application EP0 931 035 (US 6284529 B) describes a horizontal rectangular tank into which the organic solid waste to be treated is fed, either continuously or in batches, along one of the longer walls, by means of conveyor belts or similar mechanical means; the processed matter exiting on the opposite side. Above the tank there is a bridge with a trolley on to which two screw propellers are attached, in a slightly slanted position, with the tips pointing towards the inflowing side. The screw propellers are lowered into the mass near the inflowing side of the treatment tank and are then moved longitudinally across the entire length of the tank by the bridge. The bottom of the tank is provided with a ventilation system which comprises pipes grouped into zones delivering the air necessary for the biological process.

This kind of plant has two main drawbacks: there is only one trolley on which the screw propellers are mounted and therefore it comes into contact with the biological mass at the inflowing side as well as with the biomass at the outflow side, the latter, however, having to be biologically neutral according to the hygienic requirements for its application in agriculture. The use of only one trolley for the screw propellers causes contact between the untreated biological mass at the inflowing side with the mass at the outflow side and thus leads to the bacterial contamination of the latter.
Analogously, the temperature control inside the mass is difficult to realise. The achievement of a fermentation temperature above a certain minimum value ensures the production of a product free from bacterial contamination.

Patent application WO 86/01197 also discloses a plant for the biological treatment of solid organic waste.

### Disclosure of invention

The present invention relates to a biological waste treatment plant according to claim 1 aimed at remedying the drawbacks affecting the above mentioned inventions and to enable economies, with regard to both the initial investment and operating costs.

The main objects of the present invention are: to eliminate the bacterial contamination of the outgoing material owing to the presence of biomass entering from the inflowing side; to guarantee a regulated and uniform progression of the treated mass, by means of a simple and easily adjustable system; to ensure the continuous and uniform outflow of the mass from the tank, without the need of any effluent clearing reservoirs; to guarantee the self-cleaning of the screw propellers, with the continuous removal, during operation, of the threads and rags which inevitably get wrapped round the screws; to maintain a constant height of the mass in the tank, so as to compensate for the reduction of volume owing to evaporation and to other chemical processes, by adopting simple measures; to continuously remove solid layers of matter, which may accumulate on the bottom of the tank, if they have not been stirred by the screw propellers for a long time; to ensure the forced aeration of the organic mass, so as to minimize condensation inside the building housing the biological treatment tank and for oxygenating the biomass so as to reach fermentation temperatures which allow the neutralisation of the bacterial content of the mass in the inflowing side.

The present invention is based on the principle that the waste matter to be treated is stirred and conveyed exactly as if it were done manually, thus creating a series of mounds, by means of mechanical tools such as screw propellers.

According to the present invention, the treatment tank is a horizontal rectangular tank into which the organic solid waste is fed, either continuously or in batches, along one of the longer walls, by means of conveyor belts or any other mechanical means; the processed matter exiting on the opposite side. The treatment tank is divided into at least two treatment basins V1, V2, each basin being separated from the other by means of a barrier B. The barrier B has two walls (B1 and B2), one facing the inflowing side, the other facing the outflow side and each basin is provided with at least one stirring mechanical tool.

Above the tank there is a bridge with trolleys to which screw propellers are attached, in a slightly slanted position, with the tips pointing towards the inflowing side. On each trolley one or more screws may be mounted with different inclinations, preferably slanted at an angle between 10°and 50° with respect to the vertical axis. The screw propellers are lowered into the mass near the inflowing side of the treatment tank and are then moved longitudinally across the entire length of the tank by the bridge. Owing to their inclination, the screw propellers plough through the mass forming longitudinal furrows and expelling from the treatment tank a volume of waste matter equal to the volume of the furrow.

According to this technique, the waste matter is cut longitudinally, thus separating a first mound, which then flows out over the tank wall. After this first furrow has been made and reached the treatment tank wall, the set of screw propellers remains inside the waste matter and moves along the bridge to the inflowing wall, where it starts ploughing a new furrow, thus making another mound, and so on, through a succession of furrows, until it reaches the inflow end of the tank, where the screw propellers engage the fresh organic matter and create an empty space for the inflowing waste matter. At this point, the set of screw propellers, having completed the cycle, usually at the end of the day, returns to the starting point, where it remains immersed inside the mass, although it is possible to remove it, if necessary, since it is attached to the bridge by means of a pivot.

The series of mounds ensures the regular advancement of the waste matter at each passing of the screw propellers; at the same time the mounds are very close to each other, separated only by a shallow furrow, thus achieving a high degree of optimization of the treatment tank volume.

By controlling the pitch of the furrows, using a computer and corresponding programme, it is possible to maintain the mass at a constant level, since it would otherwise decrease, owing to the effects of evaporation and other chemical reactions, while the slanting of the screw propellers ensures the advancement of the mass at the desired speed, thus ensuring that it remains inside the treatment tank for a suitable period of time.

By means of a computer and suitable programme, and of the slanted screw propellers, it is possible to ensure a series of successive cycles, thus churning up the entire mass, right down to the lowest levels, preventing the matter from stagnating, since after a while it would become solid and impermeable to air.

According to the present invention, blades are attached to the upper part of the screw propeller stems so that, in contrast to other fixed blades, it is possible to cut any threads and rags contained in the mass and which may become wrapped around the rotating parts, eventually reaching the upper part of the screw propellers, thus avoiding any laborious manual cleaning operations, requiring the stopping of the plant.

Furthermore, since the set of screw propellers, when forming the first furrow, would determine the outflow from tank of the entire equivalent of a daily cycle, in a relatively short period of time, thus requiring a large reservoir to store it before subsequent treatments, according to the present invention, the outflow side of the tank is provided with a platform, along its entire length, upon which the waste matter is temporarily stored while an extractor-batcher on the edge of the bridge gradually removes and batches the treated waste matter throughout the forward and backward movements of the bridge, while the furrowing takes place inside the treatment tank. This results in a controlled and easily adjustable outflow, capable of directly supplying the subsequent mechanism without the need of any reservoirs. According to a preferred embodiment, the inclination of the wall B1 of the barrier B, i.e. the wall facing the inflowing side, is the same as the inclination of the screw propellers.

Further advantages may be obtained, with regard not only to the biological process, but also to the environmental impact, by means of a special forced aeration system from the bottom of the treatment tank and the recovery of the heat generated by the biological process, thus enabling the pre-heating of the air for circulation inside the building, as well as a considerable reduction of the quantity of air, with significant benefits for the subsequent deodorization of the surroundings.

The bottom of the tank is preferably divided, lengthwise, into a specific number of zones, at least three zones for each basin V1, V2, according to the width of the tank; the zones corresponding to various phases of the biological process of transformation of the organic mass, along entire length of the tank, and requiring different quantities of air for each phase. Each of the zones is served by a specific set of pipes, laid on the bottom of the tank and perforated so as to allow the air to pass through.

The present invention relates to a method of treating organic solid wastes according to claim 11.

The method of treating organic solid wastes according to the present invention comprises of the advancing of a first set of screw propellers parallel to the inflowing side of the tank and, at the end of a run, perpendicularly to that side along a pre-defined trajectory, so to start the advancement again parallel to the inflowing side in the reversed direction, stirring and moving the material, so as to create a series of mounds separated by furrows parallel to the inflowing side, which at every cycle advance towards the outflow side with a speed which allows every part of the mass to remain in the first basin V1 of the tank for the same time.

The movement of the screw propellers pushes the biomass towards the separation barrier B between the adjacent treatment basins allowing the said mass to cross over it and thus reach the second basin V2 provided with a second set of screw propellers which, like the first set, advances parallel to the inflowing side of the treatment tank and, at the end of a run, perpendicularly to that side for a pre-defined trajectory, so as to start the advancement again parallel to the inflowing side in the reverse direction, stirring and turning the material, so as to create a series of mounds separated by furrows parallel to the inflowing side, which at every cycle advance towards the outflow side with a speed which allows every part of the mass to remain in the second basin V2 of the tank for the same time. The cycle can be then repeated in a further basin or the treated material can be discharged.

At the end of each cycle the screw propellers may be preferably extracted from the biomass to be washed and decontaminated.

### Brief description of the drawings

In order to explain the invention in question more clearly, a more detailed structural and functional description of the preferred embodiment will now be given, with reference to the accompanying drawings, in which:
Figure 1 shows a cross section of the treatment tank;
Figure 2 shows the plan of the tank and the aeration system;
Figure 3 shows a preferred angle of the screw propellers;
Figure 4 shows the advancing of the screw propellers along a predetermined trajectory inside a treatment basin
Figure 5 shows the device for cutting threads;
Figure 6 shows two embodiments of the extracting device;
Figure 7 shows a cross-section of the tank and of the building housing it.

### Detailed description of the preferred embodiment

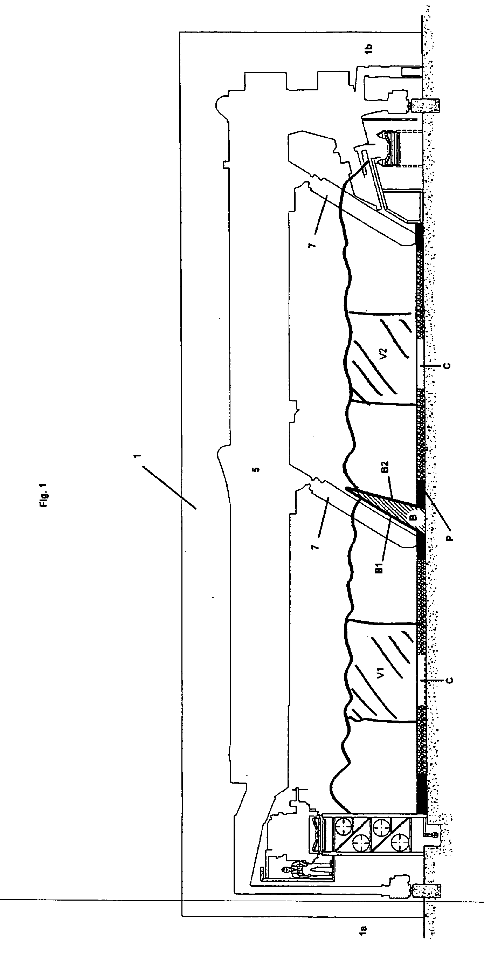

Referring to the figures, and in particular to figure 1, the organic mass 2 (not shown in Fig. 1) is fed into the treatment tank 1, preferably in a continuous manner, by means of a conveyor belt, or similar device. Above the tank 1 is a bridge 5 along which run two or more trolleys, to which is attached a set of one or more screw propellers 7, characterized in that they (i) rotate around their own axes and move from one end of the tank 1 to the opposite end, carried by the bridge 5; (ii) move along the bridge 5 across the tank 1, from one end to the opposite end; (iii) may be turned over by rotating around their rotation axis 8 (not shown in Fig. 1), thus enabling their extraction from the organic mass, if necessary.

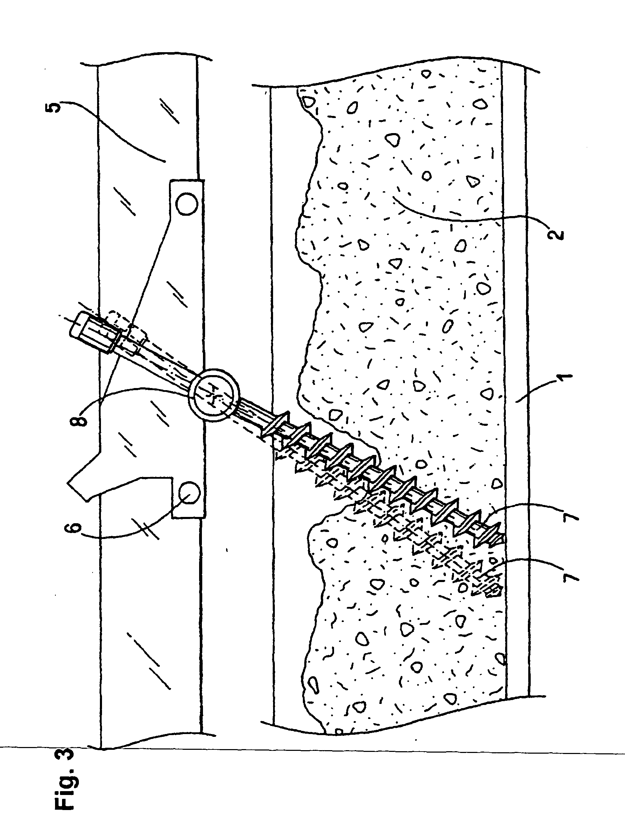

Figure 3 shows the preferred embodiment with regard to the operating position of the screw propellers 7 which, although they both skim over the bottom of the tank, have a split end section to guarantee a more effective churning of the lowest layers of the organic mass.

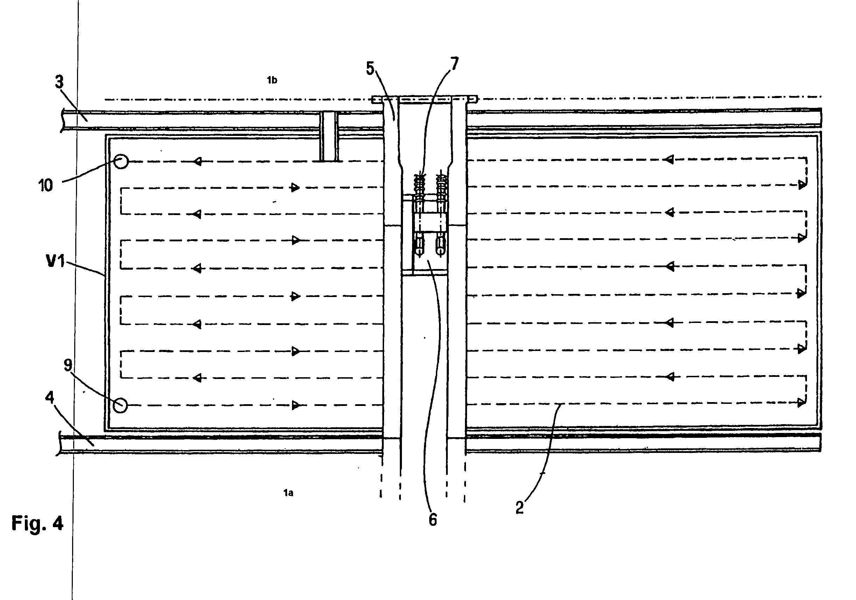

Figure 4 shows a plan of the tank with the direction of movement of the screw propellers, from the starting point 9 to the end point 10, according to a ladder pattern, indicated by a dotted line. At the end of the movement from the end point 10 to the starting point 9, the screw propellers are preferably extracted from the organic mass 2 by rotating them around their axis 8, and this operation, as previously mentioned, occurs at the end of the processing cycle, which normally lasts one day, since, according to the preferred embodiment, the organic mass is mixed once a day. The turning over of the screw propellers 7 is useful mainly to enable the bridge 5 to move away from the treatment tank 1, for the purpose of maintenance, or to be moved over another tank, since the same bridge can be used in different tanks.

The preferred embodiment comprises two screw propellers 7, placed alongside each other, longitudinally, one of which traces the furrow while the other one completes the work. The entire run of the screw propellers is active and their ladder-like movement is guided by a computer, whose programme provides for a number of different cycles, which differ by small variations in the ladder-like movement, so that the bottom end of the screw propellers trace ever-changing furrows, compared to the previous cycle, to make sure that the organic mass is ploughed through its entire depth.

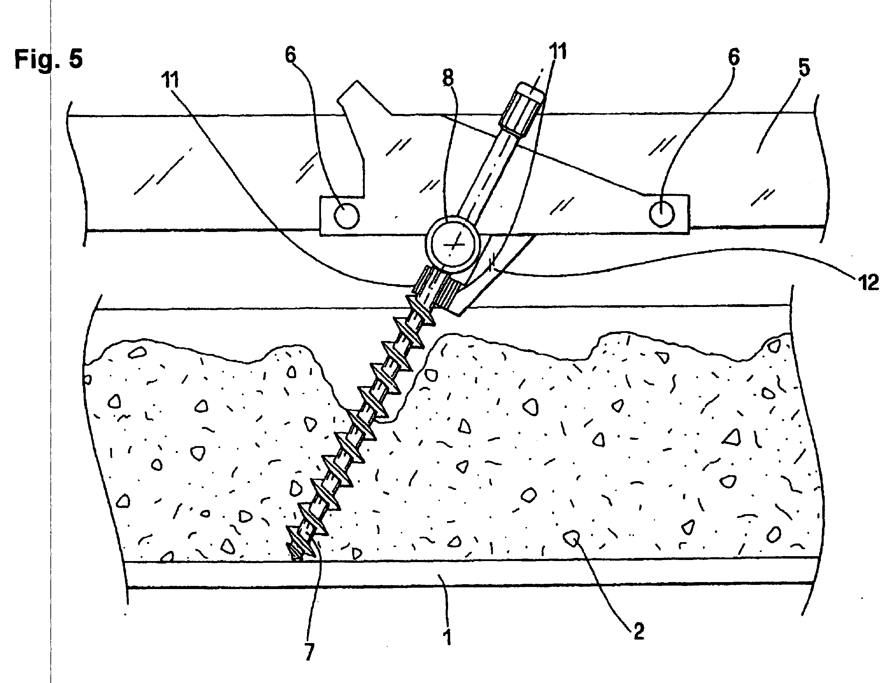

As previously mentioned, the system is also provided with a device, shown in figure 5, for cutting threads and rags which may get wrapped around the screw propellers and which inevitably tend to move upwards.

The blades 11 attached to the stem of the screw propellers cut the threads and rags wrapped around the screw stems during the rotation, which would otherwise require the machine to be stopped, by means of the counter-blades attached to the screw trolley 6.

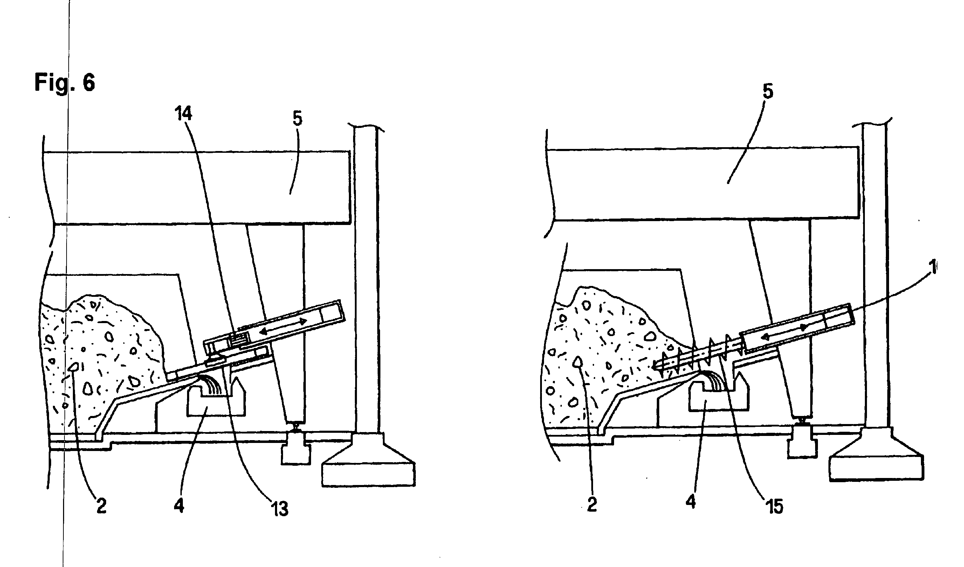

Figure 6 shows two different embodiments of the organic waste matter extracting and batching device.

The first device comprises a circular mill 13 carried by a telescopic arm 14, while the second comprises a screw feeder 15 supported on a telescopic arm 16.

Both these devices move integrally with the bridge 5 and briefly penetrate the organic waste matter to be extracted each time the bridge reaches one end of the tank to change its direction, in this manner, while the screw propellers 7 plough through the organic mass 2 inside the tank 1, the extraction and batching device completes the outflow operation, thus ensuring the removal of a sufficient amount of the mass such as to make space for the inflowing matter, when the screw propellers run the first leg of a new processing cycle.

It is well known that the organic mass must be adequately aerated, so as to supply oxygen to the micro-organisms performing the biological process.

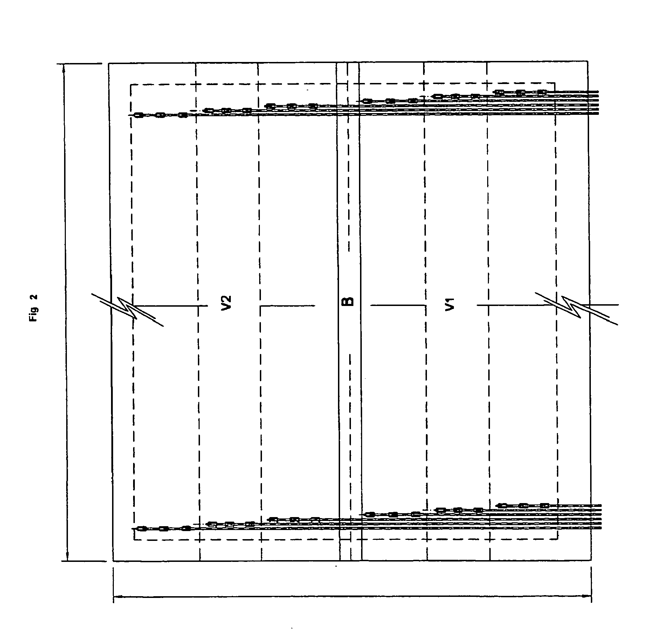

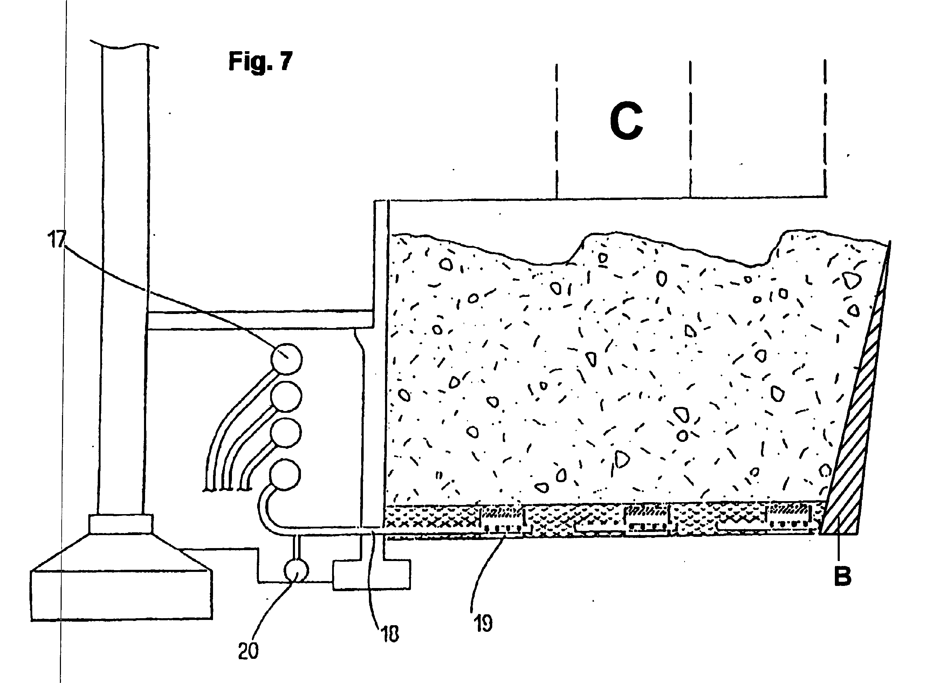

According to the present invention, the forced aeration system shown in figures 1 and 2 is achieved by blowing the air into the organic waste matter from the bottom of the tank. For this purpose, the bottom of the tank is divided, lengthwise, into a certain number of zones according to the width of the tank; the zones correspond to various phases of the biological process of transforming the organic mass, along entire length of the tank, and require different amounts of air for each phase. Each of the zones is served by a specific set of pipes 18, laid on the bottom of the tank and perforated so as to allow the air to pass through them.
The aeration system according to the present invention is characterised by the fact that the ventilation, by means of the pipes 18 shown in fig.7, is carried out by aspiration and also by the fact that the aspired air in each section of the basin is different. The quantity of air aspired in the central zone C is less than the air aspired in the adjacent zones and additionally the quantity of air in the adjacent zones saturates the biomass with oxygen.

Furthermore, the speed of advance towards the outflow side 1 b and the said air quantities in the various zones are chosen so that, in the central zone C, the mass reaches a temperature lying between 60 and 65°C. In this way, the treatment time at 60-65°C is equal to 1/3 of the transition time of the organic waste in each basin. The zones adjacent to the central one C have a temperature lying between 45 and 55°C.

Figure 7 shows a cross-section of the treatment tank and of the building housing it, showing the cross-section of the pipes for the forced aeration of the organic mass. It shows the pipes 18 with the perforated sections lying on the bottom of the tank, the protection 19 covering the perforated sections of the pipes, the conduit 20 connected to each pipe 18, for collecting the condensation, and the layer of permeable material placed over both the pipes 18 and the protections 19, to prevent any contact with the organic mass. Furthermore, the separation barrier B between the basins V1 and V2 and the central aeration zone C are also shown.

Item 17 is one of the manifolds, located outside the tank, from which the pipes 18 serving a specific zone of the tank originate. Item 19 indicates the protection covering the perforated section of the pipes 18, to prevent any infiltration by the mass, which could block the pipes. Each manifold is directly connected to a fan capable of blowing or aspirating air into or from the bottom of the tank. When the air is sucked in, since it is quite warm(40-55°C), it is first made to pass through a set of heat exchangers which transfer the heat to the fresh air before this is used for ventilating the building housing the tank.

This arrangement is very important in those areas affected by a cold and humid climate, or during the wet season, since the preliminary heating of the air, by enhancing its water vapour carrying capacity, considerably reduces condensation, while at the same time reducing the amount of air required for ventilating the building. This is an enormous advantage, from the point of view of the environmental impact, because the air which passes through the building is malodorous and needs to be deodorized before being expelled into the atmosphere; however, since the deodorizing process cannot be 100% effective; the less amount of air requiring treatment, the less its polluting effect.

## Claims

1. A plant for the biological treatment of solid organic waste, which is fed into a treatment tank (1) comprising:
- a horizontal bottom (P),
- an inflowing side (1 a)
- an outflow side (1 b),
- mechanical tools (7) with an inclined rotation axis and tips always pointed towards the inflowing side (1 a), whereby the mechanical tools (7) move the organic waste from the inflowing side (1 a) towards the outflow side (1 b)
- a bridge (5) for moving the mechanical tools (7) inside the tank (1), parallel to the inflowing side (1 a)
**characterized in that**
- the treatment tank (1) is subdivided into at least two treatment basins (V1, V2), whereby each basin is separated from the other by a separation barrier (B)
- the barrier (B) has two walls (B1, B2), one facing the inflowing side (1 a), the other facing the outflow side (1 b) of the treatment tank (1) and
- in each basin (V1, V2) of the tank (1) there is at least one mechanical tool (7).

2. A plant according to claim 1,
**characterized in that** the axis of the screw propellers is inclined between 10° and 50°, with respect to the vertical, and the inclination of the wall (B1) of the barrier (B) facing the inflowing side (1 a) is the same as the rotation axis of the mechanical tools (7).

3. A plant according to claim 1 or 2,
**characterized in that** the mechanical tools (7) are screw propellers.

4. A plant according to one of the claims 1 to 3,
**characterized in that** the inclination of the rotation axis of the mechanical tools (7) in each basin (V1, V2) of the treatment tank (1) is different.

5. A plant according to one of the preceding claims,
**characterized in that**
- the bridge (5) comprises a number of trolleys (6) which is equal to the number of basins whereby on each trolley is mounted at least one screw propeller (7), and
- the screw propellers are provided with a system of blades (11) and counter blades fixed to the trolley (6).

6. A plant according to one of the preceding claims,
**characterized in that** the maximum height of the screw propellers (7) from the bottom (P) of the tank (1) is at least equal to the height of the separation barrier (B) between the basins (V₁, V₂) of the treatment tank.

7. A plant according to one of the preceding claims,
**characterized in that** the bottom (P) of the tank (1) is provided with an aeration system comprising pipes (18) with perforated sections (19) protected by material permeable to air, grouped into at least three zones for each basin (V1, V2) according to the different quantities of air required for the biological process.

8. A plant according to claim 7,
**characterized in that** each pipe (18) is laid down on the bottom of the tank (1) is provided with a conduit (20) for collecting the condensation which is evacuated through one or more manifolds (17).

9. A plant according to one of the preceding claims,
**characterized in that** the outflow side (1b) of the tank (1) is provided with a system attached to the bridge (5) for the extraction and the separation of the organic mass, the said system being independent of the operation of the mechanical tools (7).

10. A plant according to claim 9,
**characterized in that** said system comprises a telescopic arm (14) with a circular mill (13) or a screw feeder (15).

11. Method for the biological treatment of organic solid waste, applied to a plant according to claims 1 to 10, comprising the steps of:
- feeding the waste material into the treatment tank (1) either continuously or in batches,
- stirring and moving the said material from the inflowing side (1 a) to the outflow side (1 b),
**characterized in that**:
- a first set of screw propellers advances parallel to the inflowing side (1 a) of the tank (1) and, at the end of a run, perpendicularly to that side along a pre-defined trajectory, so as to start the advancement again parallel to the inflowing side in the reversed direction, stirring and moving forward the material, so as to create a series of mounds separated by furrows parallel to the inflowing side (1 a), which at every cycle advance towards the outflow side (1b) with a speed allowing every part of the mass to remain in the first basin (V1) of the tank for the same time;
- the movement of the screw propellers pushes the biomass towards the separation barrier (B) between two adjacent treatment basins letting the mass cross over the said barrier (B);
- the screw propellers of the second basin (V2) advance parallel to the inflowing side (1a) of the treatment tank (1) and, at the end of a run, perpendicularly to that side for a pre-defined trajectory, so as to start the advancement again parallel to the inflowing side in the reverse direction, stirring and moving the material, so as to create a series of mounds separated by furrows parallel to the inflowing side, which at every cycle advance towards the outflow side (1b) with a speed allowing every part of the mass to remain in the second basin V2 of the tank for the same time;
- the above phases are repeated or the treated material is discharged.

12. Method according to claim 11,
**characterized in that** the aeration by means of the pipes (18) occurs by aspiration and the flow-rate of air sucked into each zone, into which each basin is divided, is different.

13. Method according to claim 12,
**characterized in that**:
- the flow-rate of sucked-in air in the central zone C is less than the air sucked into the adjacent zones,
- the quantity of air in the adjacent zones saturates the biomass with oxygen and
- the advancing speed towards the outflow side (1b) and the air quantities in the various zones of each basin (V1, V2) are chosen so that in the central zone C the mass reaches a temperature lying between 60 and 65°C.

14. Method according to claim 13,
**characterized in that**:
- the treatment time at 60-65°C is equal to 1/3 of the transition time of the organic waste in each basin and/or
- the zones up-stream and down-stream of the central one (C) have a temperature which is lower than the temperature in the central zone (C), preferably lying between 45 and 55°C.

## Patentansprüche

1. Anlage zur biologischen Behandlung von festem organischem Abfall, welcher in einen Behandlungsbehälter eingebracht wird, welcher umfasst:
- einen horizontalen Boden (P),
- eine Zuführseite (1 a),
- eine Austragseite (1 b),
- mechanische Werkzeuge (7), mit einer geneigten Drehachse und mit Spitzen, welche stets zur Zuführseite (1a) gerichtet sind, wobei diese mechanischen Werkzeuge (7) den organischen Abfall von der Zuführseite (1 a) zur Austragseite (1 b) bewegen,
- eine Brücke (5), welche dazu dient, die mechanischen Werkzeuge (7) im Innern des Behälters (1) parallel zur Zuführseite (1 a) zu bewegen,
**dadurch gekennzeichnet, dass**
- der Behandlungsbehälter (1) in mindestens zwei Behandlungsbecken (V1, V2) unterteilt ist, wobei jedes Becken vom anderen durch eine Trennvorrichtung (B) getrennt ist,
- die Trennvorrichtung (B) zwei Wände (B1, B2) aufweist, von denen die eine zur Zuführseite (1 a) zeigt und die andere zur Austragseite (1 b) des Behandlungsbehälters (1) zeigt, und
- in jedem Becken (V1, V2) des Behälters (1) sich mindestens ein mechanischen Werkzeug (7) befindet.

2. Anlage nach Anspruch 1, **dadurch gekennzeichnet, dass** die Achse der Schraubenpropeller zur Vertikalen um einen Winkel zwischen 10° und 50° geneigt ist und die Neigung der zur Zuführseite (1 a) zeigenden Wand (B1) der Trennvorrichtung (B) dieselbe ist wie die der Drehachse der mechanischen Werkzeuge (7).

3. Anlage nach Anspruch 1 oder 2, **dadurch gekennzeichnet, dass** die mechanischen Werkzeuge (7) Schraubenpropeller sind.

4. Anlage nach einem der Ansprüche 1 bis 3, **dadurch gekennzeichnet, dass** die Neigung der Drehachse der mechanischen Werkzeuge (7) in jedem Becken (V1, V2) des Behandlungsbehälters verschieden ist.

5. Anlage nach einem der vorangehenden Ansprüche, **dadurch gekennzeichnet, dass**
- die Brücke (5) eine gewisse Anzahl von Laufwerken (6) umfasst, deren Anzahl gleich der Anzahl von Becken ist, wobei an jedes Laufwerk mindestens ein Schraubenpropeller (7) angebaut ist, und
- die Schraubenpropeller mit einem am Laufwerk befestigten System Schneidmessern (11) und Gegenmessern versehen ist.

6. Anlage nach einem der vorangehenden Ansprüche, **dadurch gekennzeichnet, dass**
die maximale Höhe der Schraubenpropeller (7) über dem Boden (P) des Behälters (1) mindestens gleich der Höhe der Trennvorrichtung (B) zwischen den Becken (V1, V2) des Behandlungsbehälters ist.

7. Anlage nach einem der vorangehenden Ansprüche, **dadurch gekennzeichnet, dass**
der Boden (P) des Behälters (1) mit einem Belüftungssystem ausgestattet ist, welches Rohre (18) mit durchlöcherten Bereichen (19) aufweist, die durch luftdurchlässiges Material geschützt sind, wobei für jedes Becken (V1, V2) je nach den unterschiedlichen Mengen an Luft, die für den biologischen Vorgang benötigt werden, eine Unterteilung in mindestens drei Zonen vorliegt.

8. Anlage nach Anspruch 7, **dadurch gekennzeichnet, dass**
jedes Rohr (18) auf dem Boden des Behälters (1) liegt und mit einem Kanal (20) zum Sammeln des Kondensats ausgestattet ist, welches durch ein oder mehrere Verteilerstücke (17) abgeleitet wird.

9. Anlage nach einem der vorangehenden Ansprüche, **dadurch gekennzeichnet, dass**
die Austragseite (1 b) des Behälters ein an der Brücke (5) angebrachtes System zur Abführung und Abtrennung der organischen Masse aufweist, wobei das genannte System unabhängig vom Betrieb der mechanischen Werkzeuge (7) ist.

10. Anlage nach Anspruch 9, **dadurch gekennzeichnet, dass** das genannte System einen Teleskoparm (14) mit einem kreisförmigen Mühlenwerk (13) oder einem Schneckenspeiser (15) umfasst.

11. Verfahren zur biologischen Behandlung von festem organischem Abfall, welches auf die Anlage nach den Ansprüchen 1 bis 10 angewendet wird und welches die folgenden Schritte umfasst:
- Zuführung des Abfallmaterials in den Behandlungsbehälter (1) entweder kontinuierlich oder chargenweise,
- Umrühren und Bewegen des genannten Materials von der Zuführseite (1 a) zur Austragseite (1 b),
**dadurch gekennzeichnet, dass**:
- ein erster Satz von Schraubenpropellern sich parallel zur Zuführseite (1 a) des Behälters (1) vorwärts bewegt und am Ende eines solchen Laufwegs sich im rechten Winkel zu dieser Seite längs einer vorbestimmten Bahn bewegt, so dass die Vorwärtsbewegung wieder parallel zur Einführungsseite, aber in der umgekehrten Richtung gestartet wird, wobei das Material sowohl gerührt als auch vorwärts bewegt wird, so dass eine Reihe von Hügeln geschaffen wird, welche durch Furchen parallel zur Einführungsseite (1 a) getrennt sind, welche bei jedem Zyklus in Richtung auf die Austragseite (1 b) mit einer Geschwindigkeit fortschreiten, welche ermöglicht, dass jeder Teil der Masse im ersten Becken (V1) des Behälters über dieselbe Zeit verbleibt;
- die Bewegung der Schraubenpropeller die Biomasse in Richtung auf die Trennvorrichtung (B) zwischen den zwei aneinander grenzenden Behandlungsbecken drückt, wobei die Masse über die genannte Trennvorrichtung (B) treten kann;
- die Schraubenpropeller des zweiten Beckens (V2) sich parallel zur Zuführseite (1 a) des Behandlungsbehälters (1) vorwärts bewegen und am Ende eines solchen Laufwegs sich im rechten Winkel zu dieser Seite längs einer vorbestimmten Bahn bewegen, so dass die Vorwärtsbewegung wieder parallel zur Zuführseite, aber in der umgekehrten Richtung gestartet wird, wobei das Material sowohl gerührt als auch bewegt wird, so dass eine Reihe von Hügeln geschaffen wird, welche durch Furchen parallel zur Einführungsseite getrennt sind, welche bei jedem Zyklus in Richtung auf die Austragseite (1 b) mit einer Geschwindigkeit fortschreiten, welche ermöglicht, dass jeder Teil der Masse im zweiten Becken (V2) des Behälters über dieselbe Zeit verbleibt;
- die obigen Phasen wiederholt werden oder das behandelte Material ausgetragen wird.

12. Verfahren nach Anspruch 11, **dadurch gekennzeichnet, dass** die Belüftung mit Hilfe von Rohren (18) und durch Ansaugen erfolgt, wobei die Volumenströme an Luft, die in jeden der Bereiche gesaugt werden, in die jedes Becken unterteilt ist, verschieden sind.

13. Verfahren nach Anspruch 12, **dadurch gekennzeichnet, dass**:
- der Volumenstrom an Ansaugluft im zentralen Bereich (C) niedriger ist als derjenige der in die angrenzenden Bereiche gesaugten Luft,
- die Menge an Luft in den angrenzenden Bereichen die Biomasse mit Sauerstoff sättigt, und
- die Geschwindigkeit der Vorwärtsbewegung in Richtung auf die Austragseite (1 b) und die Luftmengen in den verschiedenen Bereichen eines jeden Beckens (V1, V2) so gewählt werden, dass im zentralen Bereich (C) die Masse eine Temperatur erreicht, welche zwischen 60 und 65 °C liegt.

14. Verfahren nach Anspruch 13, **dadurch gekennzeichnet dass**:
- die Behandlungszeit bei 60 - 65 °C gleich 1/3 der Verweilzeit des organischen Abfalls in jedem Becken ist und/oder
- die Bereiche auf der Anströmseite und der Abströmseite des zentralen Bereichs (C) eine Temperatur aufweisen, welche niedriger ist als die Temperatur im zentralen Bereich (C) und vorzugsweise zwischen 45 und 55 °C liegt.

## Revendications

1. Installation pour le traitement biologique des déchets organiques solides, qui sont amenés dans un réservoir de traitement (1) comprenant :
un fond horizontal (P),
un côté d'entrée (1 a),
un côté de sortie (1 b),
des outils mécaniques (7) avec un axe de rotation incliné et des pointes toujours orientées vers le côté d'entrée (1a), moyennant quoi les outils mécaniques (7) déplacent les déchets organiques du côté d'entrée (1 a) vers le côté de sortie (1 b),
un pont (5) pour déplacer les outils mécaniques (7) à l'intérieur du réservoir (1), parallèle au côté d'entrée (1 a),
**caractérisée en ce que** :
le réservoir de traitement (1) est divisé en au moins deux bassins de traitement (V1, V2), moyennant quoi chaque bassin est séparé l'un de l'autre par une barrière de séparation (B),
la barrière (B) a deux parois (B1, B2), l'une faisant face au côté d'entrée (1a), l'autre faisant face au côté de sortie (1 b) du réservoir de traitement (1), et
dans chaque bassin (V1, V2) du réservoir (1), il y a au moins un outil mécanique (7).

2. Installation selon la revendication 1, **caractérisée en ce que** l'axe des agitateurs à vis est incliné entre 10° et 50°, par rapport à la verticale, et l'inclinaison de la paroi (B1) de la barrière (B) faisant face au côté d'entrée (1 a) est le même que l'axe de rotation des outils mécaniques (7).

3. Installation selon la revendication 1 ou 2, **caractérisée en ce que** les outils mécaniques (7) sont des agitateurs à vis.

4. Installation selon l'une quelconque des revendications 1 à 3, **caractérisée en ce que** l'inclinaison de l'axe de rotation des outils mécaniques (7) dans chaque bassin (V1, V2) du réservoir de traitement (1) est différente.

5. Installation selon l'une quelconque des revendications précédentes, **caractérisée en ce que** :
le pont (5) comprend un certain nombre de chariots (6) qui est égal au nombre de bassins, moyennant quoi chaque chariot est équipé avec au moins un agitateur à vis (7), et
les agitateurs à vis sont prévus avec un système de lames (11) et de contre-lames fixé sur le chariot (6).

6. Installation selon l'une quelconque des revendications précédentes, **caractérisée en ce que** la hauteur maximum des agitateurs à vis (7) à partir du fond (P) du réservoir (1) est au moins égale à la hauteur de la barrière de séparation (B) entre les bassins (V₁, V₂) du réservoir de traitement.

7. Installation selon l'une quelconque des revendications précédentes, **caractérisée en ce que** le fond (P) du réservoir (1) est prévu avec un système d'aération comprenant des tuyaux (18) avec des sections perforées (19) protégées par un matériau perméable à l'air, groupées dans au moins trois zones pour chaque bassin (V1, V2) selon les différentes quantités d'air nécessaires pour le procédé biologique.

8. Installation selon la revendication 7, **caractérisée en ce que** chaque tuyau (18) est posé au fond du réservoir (1), est prévu avec un conduit (20) pour collecter la condensation qui est évacuée par un ou plusieurs collecteurs (17).

9. Installation selon l'une quelconque des revendications précédentes, **caractérisée en ce que** le côté de sortie (1 b) du réservoir (1) est prévu avec un système fixé sur le pont (5) pour l'extraction et la séparation de la masse organique, ledit système étant indépendant du fonctionnement des outils mécaniques (7).

10. Installation selon la revendication 9, **caractérisée en ce que** ledit système comprend un bras télescopique (14) avec une fraise circulaire (13) ou un dispositif d'alimentation à vis (15).

11. Procédé pour le traitement biologique des déchets solides organiques, appliqué à une installation selon les revendications 1 à 10, comprenant les étapes consistant à :
alimenter le réservoir de traitement (1) en déchets de manière continue ou bien discontinue,
agiter et déplacer ladite matière du côté d'entrée (1a) vers le côté de sortie (1 b),
**caractérisé en ce que** :
un premier ensemble d'agitateurs à vis avance parallèlement au côté d'entrée (1 a) du réservoir (1), et à la fin d'une course, perpendiculairement à ce côté le long d'une trajectoire prédéfinie, afin de recommencer l'avancement parallèle au côté d'entrée dans la direction inverse, agiter et déplacer la matière, afin de créer une série de monticules séparés par des sillons parallèles au côté d'entrée (1a) qui, à chaque cycle, avancent vers le côté de sortie (1 b) avec une vitesse permettant à chaque partie de la masse de rester dans le premier bassin (V1) du réservoir pendant la même période de temps ;
le mouvement des agitateurs à vis pousse la biomasse vers la barrière de séparation (B) entre deux bassins de traitement adjacents laissant la masse traverser ladite barrière (B) ;
les agitateurs à vis du deuxième bassin (V2) avancent parallèlement au côté d'entrée (1a) du réservoir de traitement (1) et, à la fin d'une course, perpendiculairement à ce côté sur une trajectoire prédéfinie, afin de recommencer l'avancement parallèlement au côté d'entrée dans la direction inverse, agiter et déplacer la matière, afin de créer une série de monticules séparés par des sillons parallèles au côté d'entrée qui, à chaque cycle, avancent vers le côté de sortie (1 b) avec une vitesse permettant à chaque partie de la masse de rester dans le deuxième bassin (V2) du réservoir pendant la même période de temps ;
les phases ci-dessus sont répétées ou bien la matière traitée est déchargée.

12. Procédé selon la revendication 11, **caractérisé en ce que** l'aération au moyen des tuyaux (18) se produit par aspiration et le débit de l'air aspiré dans chaque zone, dans laquelle chaque bassin est divisé, est différent.

13. Procédé selon la revendication 12, **caractérisé en ce que** :
le débit de l'air aspiré dans la zone centrale C est inférieur à l'air aspiré dans les zones adjacentes ;
la quantité d'air dans les zones adjacentes sature la biomasse avec l'oxygène, et
la vitesse d'avancement vers le côté de sortie (1 b) et les quantités d'air dans les différentes zones de chaque bassin (V1, V2) sont choisies de sorte que dans la zone centrale C, la masse atteint une température comprise entre 60 et 65°C.

14. Procédé selon la revendication 13, **caractérisé en ce que** :
le temps de traitement à 60-65°C est égal à 1/3 du temps de transition des déchets organiques dans chaque bassin, et/ou
les zones en amont et en aval de la zone centrale (C) ont une température qui est inférieure à la température dans la zone centrale (C), de préférence comprise entre 45 et 55°C.
